(19) Europäisches Patentamt / European Patent Office / Office européen des brevets

(11) **EP 2 933 081 A1**

(12) **EUROPEAN PATENT APPLICATION**

(43) Date of publication:
**21.10.2015   Bulletin 2015/43**

(21) Application number: **15275121.0**

(22) Date of filing: **14.04.2015**

(51) Int Cl.:
*B29B 13/02* (2006.01)   *B29B 13/08* (2006.01)
*B29C 51/42* (2006.01)   *H05B 6/78* (2006.01)
*B29C 35/08* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **14.04.2014   GB 201406657**

(71) Applicant: **Pera Technology Limited**
**Melton Mowbray**
**Leicestershire LE 13 0PE (GB)**

(72) Inventors:
• **Weathley, Richard Lyster**
  **Leicester, LE5 1TP (GB)**
• **Meredith, Roger John**
  **Leicestershire, LE15 7QA (GB)**

(74) Representative: **Williams Powell**
  **11 Staple Inn**
  **London WC1V 7QH (GB)**

(54) **MICROWAVE HEATING APPARATUS AND METHOD**

(57)    There is disclosed heating apparatus for heating by means of microwave radiation a work piece. The apparatus includes a plurality of waveguides (40, 42, 44) providing heating stages which are susceptible to having standing waves produced therein which are phase offset (46, 48) relative to one another. The offset waveguides (40, 42, 44) can provide substantially uniform heating of the work piece (30) compared to prior art attempts at heating work pieces by means of microwave radiation. There are described arrangements providing a plurality of sets of off-set waveguides and a tuning mechanism to tune the waveguides (40, 42, 44).

FIGURE 5

## Description

The present invention relates to a method and apparatus for heating materials, particularly formable materials such as thermoplastic materials including polymers and the like. The method and apparatus are particularly suited to the heating of web or sheet material.

There is a long history in the art of heating thermoplastic materials for subsequent processing, in particular for moulding. A variety of heating methods are used and there is a constant pressure in the art to seek to reduce the time for forming articles from such materials. It is typically the necessary heating and cooling time of the work piece which slows the production process. This bottleneck applies to the majority if not all current thermoplastic processing methods.

A common problem in the industry is that of heating quickly a wide web of material, broadly electrically non-conducting, to a high and uniform temperature for subsequent processing. Examples of subsequent processing include forming articles into practical shapes, for example by vacuum forming, extrusion or blow moulding and so on.

In processes which use conventional surface heating, such as by infra-red or hot air, the process is very slow because there is always a maximum allowed peak temperature, above which damage to the material or structure being heated can occur. Moreover, such materials usually exhibit a low value of thermal diffusivity, which restricts the rate at which the temperature of the material rises as a result of internal thermal conductivity of the material. As a result, such processes involve restrictions to the heating temperature which can be applied to the material and time delays during which the material becomes sufficiently uniformly heated to be able to be processed.

These considerations apply to a large variety of thermo formable materials, including a wide range of rubbers and plastics, usually compounded when these include inert and/or chemically active additives. For instance, vulcanizing rubber needs to be heated to 180 degrees so as to be formable but will degrade if heated to 190 degrees or above. This provides only a small range of operable temperatures.

It is well-known that microwave volumetric heating is a potential solution to the shortcomings of other heating methods since microwaves induce heat through the thickness of the workload material, creating a uniform temperature through the thickness with a very high rate of rise in temperature of the material being heated. However, there is a problem in achieving uniform heating across the surface of the web of material using microwaves.

The inventors have discovered that this is caused primarily by the presence of standing waves. Standing waves arise from the vector addition of two or more coherent microwave fields originating from apparently different locations. For example, one field may originate directly from the source while other fields may originate from one or more reflections of the original wave. It is the interaction of these waves which causes the standing waves in the apparatus and within the material.

More specifically, if the web of material to be processed lies in an X-Y plane designated by axes Ox and Oy with a vertical axis Oz, and if the web travels along the zone in which the microwaves are applied at a constant velocity along the axis Ox, then it is noticeable by inspection of the web of material that the heating intensity along any path parallel to Ox is constant, provided that the microwave power is maintained at a constant level. In the vertical direction Oz, the web of material is generally thin compared with the wavelength of the microwave radiation and the heating variation through the thickness, parallel to Oz is therefore negligible. The remaining problem is non-uniform heat distribution parallel to Oy.

This characteristic of microwaves causes hot zones in a work piece heated by microwaves and thus uneven heating. This unevenness leads to problems of the types mentioned above.

It is known from GB 2 042 703 A to use two waveguides for the drying of web material in which obstacles are present in the waveguides and offset by a quarter of the guide wavelength of microwave power supplied. This is to ensure that the nodes and antinodes of the reflected microwaves in the waveguides will occur in different relative positions when in operation.

Other examples of the use of offset waveguides are disclosed in GB 650 337, EP 0 667 732 A1, FR 2 683 420, US 2002/0088799 A1 and EP 0 089 288 A1.

JP 2006134621 discloses a microwave heating device.

The inventors have discovered that prior art arrangements of offset waveguides generally do not provide an optimal level of uniformity in the temperature profile. In many cases, the temperature profile of prior art arrangements varies by as much as 5°-10°C. This is not ideal for thermoforming applications where very even heating is important for example in order to allow the material being heated to have the desired properties throughout to allow it to be formed into shapes or articles. As mentioned above, some material provides only a very narrow range of operating temperatures, meaning an error of 5°-10°C in the temperature profile would not be sufficiently uniform.

The present invention seeks to provide an improved method and apparatus for heating a work piece by microwave radiation.

According to an aspect of the present invention, there is provided a method of heating a work piece by microwave radiation including the steps of generating a plurality of microwave heating stages in respective waveguides, which heating stages provide microwaves which are phase offset relative to one another, and passing said work piece through said heating stages so as to cause said work piece to be heated by each of said plurality of microwave stages.

According to an aspect of the invention, there is provided a method of heating a work piece by microwave radiation including providing n microwave heating stages in respective waveguides, which heating stages provide respective standing waves which are phase offset relative to one another by substantially $2\pi/n$ radians, and passing the work piece through the heating stages so as to cause the work piece to be heated by each of the n microwave stages; wherein n is a multiple of three.

As is described below, it has been found that the standing waves produced by a microwave signal in a waveguide has a non-sinusoidal form. Instead of seeking to address the issue of uneven heating of a work piece by conventional methods, the method taught herein addresses the problem of hot zones by applying offset microwaves to the work piece so as to impart an overall substantially even heating energy to the work piece.

In the preferred embodiment, the offset heating stages are evenly offset relative to one another in terms of phase. This has the advantage that the overall energy imparted to the work piece through all of the different waves is evened out, substantially cancelling any uneven heating caused by a single one of the waves. It is not, however, essential for the different waves to be evenly offset in this manner, as in some embodiments it is desirable to have some unevenness in the work piece, depending on the requirements of the work piece.

In the preferred embodiment, the method includes the step of passing the work piece through three different microwave heating stages, these advantageously being offset relative to one another by $2\pi/3$ radians (120 degrees). The stages are preferably longitudinally aligned with respect to one another, perpendicular to direction of motion of the work piece through the heating stages.

The inventors have discovered that having three heating stages provides a significantly more uniform temperature profile across a width of the work piece. Embodiments described herein can produce a temperature profile with variability of no more than 2°C. This is particularly important for heating formable products where a very even temperature profile is often needed, or to keep the work piece within a small window of temperatures within which it is workable.

Three heating stages is considered to be the optimum but other advantageous structures which can achieve balanced heating have a number of stages which is a multiple of three, with the offset relative to one another of $2\pi/n$ radians, where n in the number of stages.

The microwave power emitted at each stage may be at the same frequency or at different frequencies.

Individual generators are used in a practical embodiment so that the energy profile across the work piece can be balanced.

Nevertheless, in some embodiments, the method can provide the microwave from a single generator and feed through a passive divider so as to deliver power to each of the heating stages.

Advantageously, the method includes the step of tuning the microwaves by means of a short-circuit piston and iris arrangement, preferably in conjunction with the monitoring of microwave field at several points within each stage.

The method can include manual or automatic tuning of the heating stages by means of a short-circuit piston and/or by means of an adjustable iris.

Preferably, the heating stages are offset relative to one another by $\lambda g/n + x$, wherein $\lambda g$ is a guide wavelength of the microwave radiation and wherein for each heating stage, x is a tuning adjustment that allows balancing of the energy application across the work piece, thereby to enable the overall power of reflected microwaves to be reduced and preferably minimised.

Preferably, the method includes monitoring a power of reflected microwaves within each of the heating stages, and tuning the heating stages to minimise the overall power of reflected microwaves, preferably including adjusting x for each heating stage and/or adjusting the short-circuit piston and/or adjusting the iris arrangement and/or varying the power provided to each waveguide.

In a practical embodiment, the method includes the step of passing the work piece through a plurality of sets of microwave heating stages of the type defined herein.

According to an aspect of the present invention, there is provided apparatus for heating a work piece by microwave radiation including at least one heating unit comprising a plurality of waveguides each waveguide providing a microwave heating stage, said waveguides being phase offset relative to one another so as to provide heating displaced in phase, one relative to another, with at least one microwave generator for generating microwaves in each of the waveguides and a common path for a work piece to pass through the plurality of waveguides, wherein the apparatus provides for a work piece to be heated by each of said plurality of microwave stages.

According to an aspect of the invention, there is provided an apparatus for heating a work piece by microwave radiation including at least one heating unit comprising n waveguides, each waveguide providing a microwave heating stage, the heating stages being susceptible to having standing waves produced therein which are phase offset relative to one another by substantially $2\pi/n$ radians so the waveguides can provide heating displaced in phase relative to one another; and a common heating path for a work piece to pass through the n waveguides, wherein the apparatus provides for the work piece to be heated by each of the n heating stages; wherein n is a multiple of three.

The apparatus is preferably for heating a formable material.

Advantageously, the waveguides are evenly offset relative to one another in terms of phase. Preferably, there are provided three waveguides in the or each heating unit, the waveguides being in the preferred embodiment offset relative to one another in terms of by 2π/3 radians (120 degrees).

Embodiments can provide off-set standing waves in a work piece as it travels through the heating apparatus.

It is preferred that the waveguides can be moved relative to one another perpendicular to the direction of movement of the work piece, which enables adjustment of the relative positions of the standing waves generated in the waveguides, useful for tuning and for adjusting for extraneous effects on the microwaves such as reflections off the work piece.

Preferably, the heating stages have relative offsets which are adjustable to maintain a relationship to one another in terms of phase of the standing waves produced therein being offset by 2π/n radians.

In some embodiments, there can be provided a common microwave generator and a passive divider coupled between the generator and the waveguides, thereby to deliver power to each of the waveguides

However, in a preferred embodiment, the apparatus includes a plurality of generators, each for a respective waveguide. Where a plurality of generators is included, these may generate the same or substantially the same microwave power or they may generate microwaves at different powers. The generators may generate microwaves at the same frequencies or may generate microwaves at different frequencies. Thus, in an embodiment, the microwave power source is a set of three similar microwave generators generating substantially the same, but not necessarily equal, microwave power output at substantially the same, but not necessarily equal, frequencies.

Advantageously, the apparatus or preferably the waveguides include a tuning mechanism, preferably including a short-circuit piston; preferably including a short-circuit piston, and/or an iris plate, in each waveguide. Preferably, the tuneable waveguides are adjusted for resonance by a sliding short-circuit piston at the end of the waveguide remote from its generator and an iris plate at the end nearest to its generator, to form a matching susceptance, such that the waveguides can be tuned to be matched at resonance, corresponding to minimal power reflected towards the generators.

In preferred embodiments, the apparatus includes a microwave emitter for emitting microwaves into each of the waveguides; wherein the waveguides are each driven to resonance by a sliding short-circuit piston at an end of the waveguide remote from the microwave emitter and an iris plate at the end nearest to the microwave emitter.

The apparatus preferably includes a control unit operable on the basis of feedback to control the tuning mechanism, for example to control the pistons. The short-circuit pistons may be of a low-high-low impedance type and positioned by a drive motor controlled by the control unit.

The apparatus can include a monitor for monitoring the reflected microwave power within each of the heating stages, wherein a control unit is configured in response to a signal from the monitor to tune each heating stage to reduce the overall power of reflected microwaves.

There may be provided a plurality of heating units, which may be arranged linearly with respect to one another, so as to heat the same work piece in succession, or in parallel so as to heat different samples or parts of material in parallel. This may be useful for the heating of a work piece or work piece combination to have a substantial depth or thickness. Of course, a combination of series and parallel arranged heating units could be provided.

The waveguides can be arranged linearly along a direction of movement of a work piece through the heating apparatus.

The preferred embodiment provides apparatus for heating a wide web of material comprising a set of three similar rectangular waveguides having slots cut centrally along the centre-lines of broad faces thereof to allow passage of a sample of material, the three waveguides being resonant and positioned in echelon formation at right angles to an axis of travel of the work piece. The waveguides are arranged so that E-field standing waves are positioned relatively at longitudinal positions 0 (datum), 2π/3 and 4π/3 electrical radians and wherein the web travels intermittently or continuously at a controlled velocity.

Advantageously, the resonant waveguides are tapered in a direction along the width of the broad face, thereby to have a varying cut-off wavelength. This structure can substantially compensate naturally occurring attenuation of the coupling of the load to the microwave field.

In some embodiments, adjacent waveguides can be separated by a wall thickness of approximately one quarter wavelength.

There may be provided an additional and/or conventional heating stage at an exit of the waveguides. Such a heating stage, which preferably is not a microwave heating stage, can act to keep the work piece at the desired or attained temperature until it can be processed, that is thermoformed. Such an additional heating stage may provide hot air, be a hot air heating stage, may be an infrared heating stage or heat by any other suitable heating including hot oil, water, steam or air. Such a heating stage would typically be a dwell tunnel used for keeping the work piece at working temperature.

In an embodiment, there may be provided a plurality of sets of three resonant waveguides.

In an embodiment, there is provided a plurality of microwave emitters or generators and a closed-loop automatic tuning system to maintain resonance between the emitters or generators and their respective resonant waveguides.

The apparatus may have at least one microwave operational frequency of 2450 ±50 MHz; 896 ± 10 MHz; and/or 915 ± 13 MHz.

In a practical embodiment, the microwave heating apparatus is designed for heating a wide web of material, wherein the said web is provided with slots in the selvage edges thereof which engage with drive rollers of the apparatus, the drive rollers having pins inserted to match the selvage edges, thereby providing a means of positive mechanical drive of the web through the heating apparatus.

The resonant waveguides may be manufactured by a milled-block technique.

The method and apparatus disclosed herein can be used for the uniform heating of a wide web of 'lossy' dielectric material.

The basic element of the preferred embodiment is a rectangular waveguide of selected electrical length tuned to resonance in the H01 N, alias TE01 N mode, (N is an integer) having a pair of slots cut in the centre of the broad faces to allow passage of the workload sheet. These slots are essentially non-radiating because they do not interrupt any microwave wall-currents. When fed with microwave power and tuned to resonance, a sheet workload travelling along the axis Ox at constant velocity will impart a quasisinusoidal heating pattern with a periodicity along the axis Oy. This heating pattern translates to a temperature pattern which corresponds to a standing wave having a very deep null at the minimum point and is not a sine wave in this area. By adding two further identical waveguides parallel to the first, and spaced apart from the first by an electrical distance of 120 degrees and 240 degrees respectively in the direction Ox, it can readily be shown that when the three waveguides are fed with equal amounts of power the resultant total sum of the power dissipation within the three waveguides is a constant, giving uniform heating across the width of the web.

Embodiments of the present invention are described below, by way of example only, with reference to the accompanying drawings, in which:

Figure 1 is a schematic diagram of an example of a waveguide for receiving microwaves;
Figure 2 is a vector diagram of the resultant wave strength based upon the input strength (voltage) of the microwave energy;
Figure 3 is a graph of strength of the microwave along the waveguide of Figure 1;
Figure 4 is a schematic diagram showing creation of hot zones in a material being heated in the waveguide of Figure 1;
Figure 5 is a schematic diagram of a preferred embodiment of a waveguide structure;
Figure 6 is a schematic plan view of the embodiment of Figure 5;
Figure 7 is a schematic diagram of an embodiment of a waveguide provided with a tuning arrangement;

Figure 8 is a schematic diagram of another embodiment of a waveguide;
Figure 9 is a schematic diagram of an embodiment of an array of a plurality of sets of waveguides according to the embodiment of Figure 5; and
Figure 10 is a schematic view in plan of another embodiment of a waveguide structure.

It is to be understood that the drawings are schematic only and not to scale. In some drawings the schematic waveguides are shown being larger or wider than the waveguides of other drawings but this is solely for the sake of clarity of representation and description.

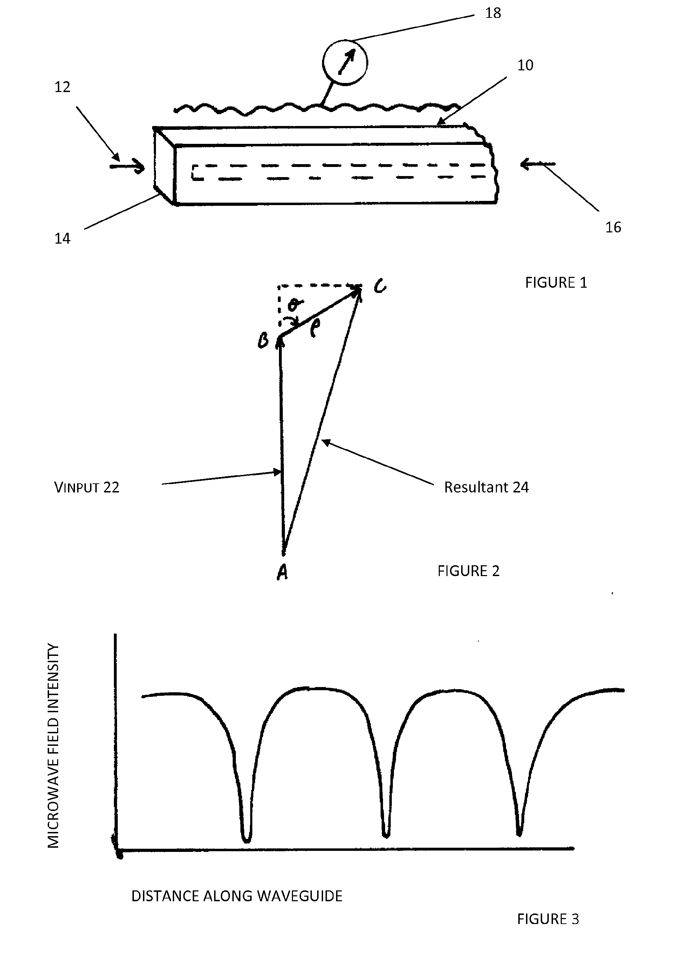

Figure 1 shows a diagram of a resonant waveguide 10 in which a forward wave from a microwave power generator 12 is fed into one end 14 of the waveguide 10. The forward wave reflects off the opposite end of the waveguide 10, in the direction of arrow 16, back into the waveguide 10. As a result of the interaction of the forward and reflected waves, the strength of the microwave field along the waveguide 10 is non-uniform, represented by the arrow 18 in Figure 1.

Figure 2 is a vector diagram showing the resultant wave strength 24 in the waveguide 10, for a given power input AB. A further vector BC represents a reflected wave with amplitude R. The vector diagram of Fig 2 reveals the amplitude and relative phase angles of the forward 22, reflected and resultant waves 24. Analysis of the vector diagram reveals on inspection that the vectors AB and BC rotate as the point of sampling is moved along the resonator, and the resultant vector AC (24) represents the microwave field intensity at the plane of heating of the workload. Vector AC represents the amplitude of the electric field, and its square the power density, a scalar. $AC^2$ is readily calculated applying Pythagoras and elementary trigonometry.

In this case, the power density of the reflected wave can be calculated as follows:

$$R^2 = (1 + \rho \sin \theta)^2 + (\rho \cos \theta)^2$$

Figure 3 is a graph showing the microwave field intensity along the waveguide, showing the non-linear form of the standing wave which results in the waveguide 10. As can be seen, the intensity of the standing wave varies between relatively wide peaks and narrow troughs. The peaks and troughs are caused, as will be appreciated by the person skilled in the art, by the interaction of the forward wave and the reflection thereof along the waveguide, these acting to supplement one another and to attenuate one another in dependence upon their phases. It has been found that the intensity varies in the manner shown, rather than sinusoidally. It is this variation in intensity which results in uneven heating of a substrate.

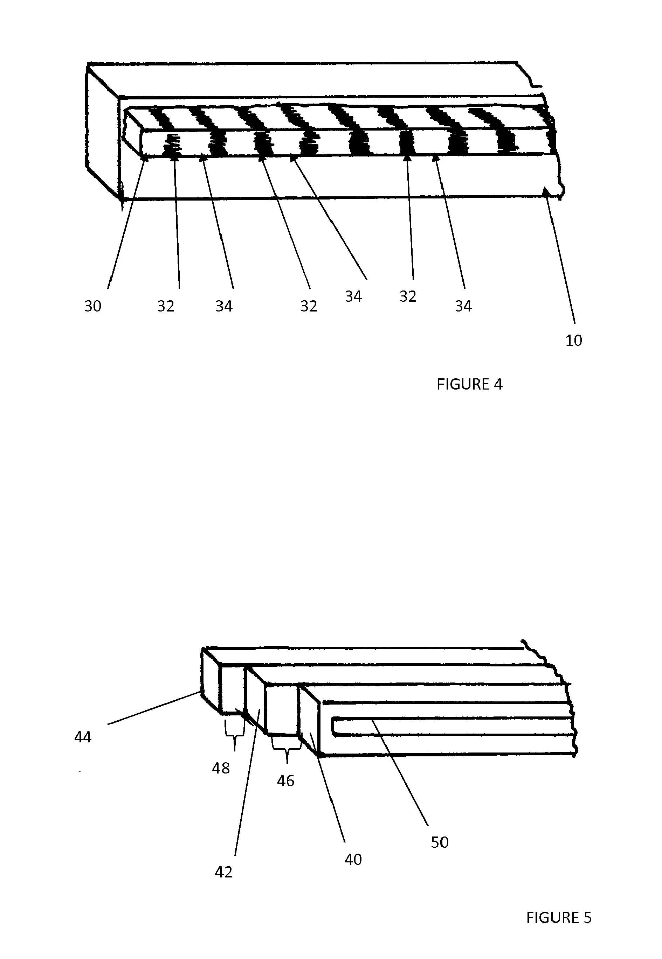

Figure 4 shows an example of a substrate 30 heated by a conventional rectangular waveguide 10. As a result of the varying intensity of the standing wave along the waveguide, there are produced a series of hot zones 32 in the substrate and cooler zones 34 interdigitated between the hot zones 32. These cooler zones 34 result in having to rely, in the prior art, upon conduction within the substrate 30 so as to heat this uniformly and in practice in a substantial increase in the time required to heat the substrate to a processing temperature. The increase is particularly prevalent with substrates which are poor heat conductors.

Referring now to Figure 5, there is shown in schematic form a preferred embodiment of waveguide structure suitable for a heating apparatus which can overcome the problems of prior art assemblies. The structure, in this embodiment, is formed of three waveguides 40, 42, 44 each providing a heating stage. A heating stage is a section, or possibly the entirety, of a waveguide, which is arranged to be resonant at a chosen operating microwave frequency and to provide a standing wave in the heating stage. The heating stages are offset relative to one another in the direction of feed of the microwaves along the waveguides 40, 42, 44. In this embodiment, the amount of offset 46, 48 between the heating stages of the waveguides 40-44 is such as to cause the standing waves in each of the waveguides 40-44 to be 120 degrees ($2\pi/3$ radians) offset with respect to one another. However, in other embodiments, there can be provided 6, 9, 12, or other multiples of three waveguides, with the relative offset between the heating stages of the waveguides being such as to cause standing waves in adjacent waveguides to be offset by 60°, 40°, 30° and so on. In general, there can be provided 3m waveguides, with the relative offset between the heating stages of the waveguides being arranged to cause offsets between the standing waves in adjacent waveguides of $2\pi/3m$ radians, or 360°/3m.

The offsets of the heating stages are preferably formed by offsets of the waveguides themselves. Although in the above described embodiments the offsets are arranged to cause standing waves in adjacent waveguides to be offset by $2\pi/3m$ radians, the waveguides do not need to be arranged in a cascading order of offsets. As long as for the m waveguides, the heating stage of the $i^{th}$ waveguide has an overall offset of $2\pi(i-1)/3m$ from a base point, the waveguides do not need to be arranged in order of i.

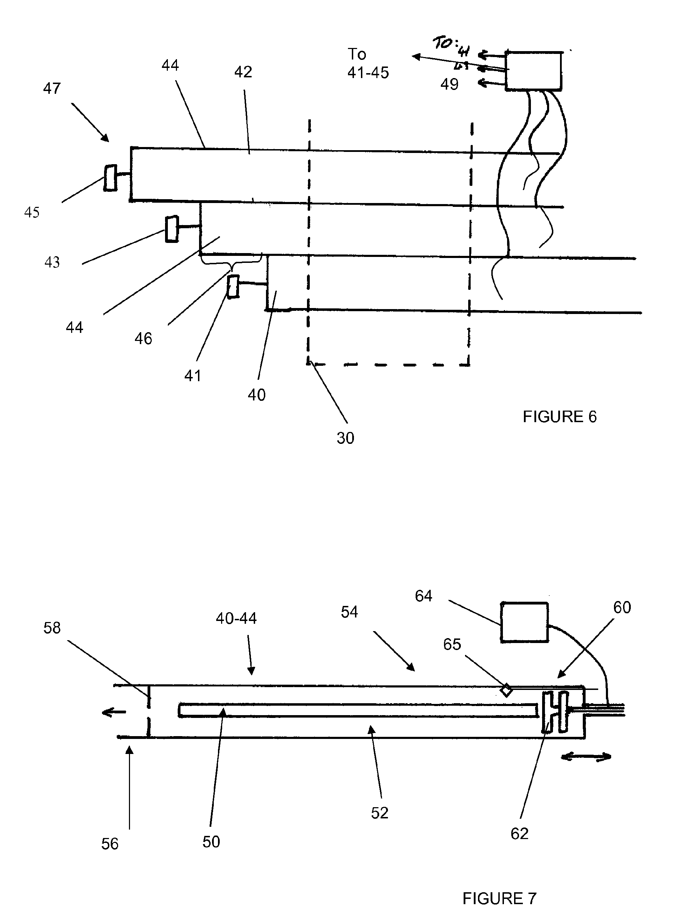

Arranged to pass through the waveguides 40-44 is a common slot or aperture 50 for the passage of a substrate 30 therethrough. This is shown schematically in Figure 6 in plan view. The structure is such that the substrate to be heated is fed through the heating stages of the series of offset waveguides.

The different waveguides 40-44 are in a preferred embodiment movable relative to one another (typically from side to side in the views of the drawings) so as to change the phase offset. This can enable adjustment of the relative performances of the waveguides so as to adjust for extraneous effects such as reflections off the work piece and for tuning. Any suitable movement mechanism can be provided, including manual and motorised.

Each waveguide produces a standing wave pattern of the type shown in Figure 3 and thus a heating effect equivalent to that shown in Figure 4. However, the phase offset of the waveguides results in each standing wave being laterally offset with respect to the substrate 30 and thus for the "hot zones" produced in each waveguide to move across the substrate. The inventors have discovered that by having a multiple of three (3m) waveguides with offsets of $2\pi/3m$, the waveguide structure is able to provide a significantly more uniform temperature profile across a width of the substrate (its width being its dimension transverse to the direction of motion of the substrate 30 through the heating assembly 340-44). As mentioned above, prior art documents disclose offsets of $\lambda/4$. However, such offsets can produce variability in the temperature profile of 5°-10°C. Embodiments described herein using multiples of three waveguides can produce a temperature profile with variability of no more than 2°C. This is particularly important for heating formable products where a very even temperature profile is often needed, or to keep the substrate within a small window of temperatures within which it is workable.

In the embodiment of Figure 5, once passed through all three waveguides 40-44, the substrate will be substantially uniformly heated across its entire width. Given the uniform heating of the substrate 30 in this process, the overall heating process can be effected in a substantially shorter time than prior art systems as it is not necessary to rely upon conductive heat transfer within the substrate 30 in order to heat it uniformly.

Shown in Figure 6 are three separate microwave emitters 41, 43, 45 configured to provide microwaves at the chosen operating frequency to each of the wave guides. Also shown is a control unit 49 for a closed-loop automatic tuning system designed to maintain resonance in the heating stages. Further details of the tuning system are described below. The control unit may use a search-and-lock-on protocol, established at start-up, in the frequency domain.

Figure 7 shows in schematic form a preferred structure for each of the waveguides 40-44. Each waveguide 40-44 has a rectangular cuboidal form with an axial slot 50 cut along the centrelines of the broad faces 52, 54 (the broad face 54 being at the rear of the waveguide 40-44 in the view of Figure 7 and thus not visible) to allow passage of a workload or substrate 30 in thin sheet form. The internal dimensions of the waveguide 40-44 are chosen to form the heating stage, which in embodiments is a cavity in the waveguide, so that only the fundamental mode can freely propagate at the chosen operating frequency. One end 56 of the heating stage of the waveguide 40-44 is terminated in an iris plate 58 forming a quasi-reflectionless power feed, while the other end 60 is provided with an adjustable short-circuit device 62 which is positioned to tune the heating stage of the waveguide 40-44 to resonance at the chosen operating frequency. The adjustable short-circuit device 62 is preferably an adjustable sliding short circuiting piston able to be moved within the waveguide 40-44 so as to alter the effective length of the heating stage and thus the resonance of the heating stage or the configuration of the standing wave.

The sliding short-circuit piston is located at the end of the waveguide remote from its microwave emitter. The sliding short-circuit piston and the iris plate form a matching susceptance. The iris plate 58 comprises first and second plates each with an aperture, wherein the apertures overlap to provide an aperture of diameter chosen and variable to minimise power reflected to the emitter. The first and second plates of the iris plate are preferably rectangular, and the aperture is preferably rectangular or circular. A further perturbation tuning device may be used to allow fine adjustment of tuning. The iris plate 58 forms a convenient electrical datum plane for aligning the relative offset or displacement between the three heating stages of the waveguides 40-44. An alternative embodiment provides an iris plate which is similar but tuned by the insertion of a dielectric rod.

The short-circuit pistons 62 are preferably of the low-high-low impedance type, well known to those skilled in the art, and are positioned longitudinally by a drive motor 64 forming part of a frequency control loop.

In operation the effective resonant length of the heating stage is an integral number of half waveguide wavelengths and correspondingly there is a linear array pattern of heating.

All three waveguides 40-44 preferably have the same structure, but arranged so that standing waves produced in two of these are $2\pi/3$ radians and $4\pi/3$ radians (120° and 240° electrical) relative to a standing wave produced in the first heating stage. These phase differences can be set as follows.

In general, offsets of $2\pi/3$ and $4\pi/3$ radians can be obtained by mechanically displacing waveguides 42 and 44 relative to waveguide 40, in the embodiment of Figures 5 and 6 so that the datum planes of waveguides 42 and 44 are displaced in the direction of emission of microwaves by $\lambda/3$ and $2\lambda/3$, where $\lambda$ is the chosen operating waveguide wavelength of microwaves to be used.

However, as discussed above, tuning adjustments may need to be made to the adjustable short-circuit device 62 or iris plate of a waveguide in order to ensure that the respective heating stage is resonant or to compensate for manufacturing tolerances which may mean that the waveguides are not identical or to compensate for other factors which may have an effect on the resonance or configuration of the standing wave.

In addition, the tuning required of a heating stage can vary during operation of the heating apparatus. For example, the temperature of a substrate in a heating stage affects the load presented to the heating stage. This can take the heating stage out of resonance or vary the configuration of the standing wave so that the offsets between that and other heating stages are no longer optimal.

In order to provide a uniform temperature profile across a substrate as it is being heated, the relative configuration of the standing waves is preferably as described above and the heating efficiency of the standing waves in each of the waveguides is preferably substantially equal. For the reasons given above, these are affected by whether each heating stage is correctly tuned. As well as having an undesired configuration of standing wave, if a heating stage is detuned, there can be an adverse effect on the heating efficiency of that heating stage, leading to an undesired variability in the temperature profile of the substrate being heated.

Since the configurations of the standing waves are relatively interdependent, a change in the tuning of one heating stage will also have an effect on the tuning required for other heating stages.

The inventors have discovered that an advantageous way of tuning all waveguides is to tune them so as to minimise the overall power of reflected microwaves within the heating stages.

As shown in Figure 7, a monitor in the form of a field probe 65 is provided in each heating stage and coupled to the control unit 49. The field probes 65 are configured to monitor the power of reflected microwaves, that is microwaves reflected from the iris plate 58 in this embodiment, and to provide an indication of this reflected power to the control unit 49.

The control unit 49 is configured to operate each of the waveguides in order to adjust the tuning of the waveguides in order to minimise the overall reflected power in the waveguide structure.

Tuning can include varying a power difference between the guides and/or adjusting the short-circuit device and/or the iris plate and/or adjusting the relative offset of the datum points of the waveguides.

In general, if there are n waveguides, the standing waves of which are to be offset by $2\pi/n$, the waveguides are tuned so that the datum points of the waveguides are offset by $\lambda g/n + x$, where $\lambda g$ is the waveguide wavelength and x is selected for each waveguide in order to minimise the overall reflected power in all waveguides of the structure.

The preferred embodiment provides microwave apparatus for heating a wide web of material which includes a set of three similar rectangular waveguides having slots cut centrally along the centre-lines of their broad faces to allow passage of the said web; the three waveguides being resonant and positioned in echelon formation perpendicular to the axis of travel of the web. The arrangement is such that the E-field standing waves are positioned relatively at longitudinal positions 0 (datum), $2\pi/3$ and $4\pi/3$ electrical radians and wherein the web travels intermittently or continuously at a controlled velocity.

The microwave emitters may be provided by a set of three similar microwave generators 41-45, one for each waveguide, generating substantially the same, but not necessarily equal, microwave power output at substantially the same, but not necessarily equal, frequencies.

It is possible to use different frequencies. However, if using different frequencies then preferably these would be approximate multiples of the base frequency such as 2.45 and 5.8. The higher frequency can for example be used to further smooth the energy profile. In cases using different frequencies it may be preferable to have more than 3 waveguides.

In another embodiment, there may be provided a single microwave generator unit feeding a passive power divider (not shown) delivering three substantially the same but not necessarily equal amounts of power.

As described above, there is preferably a separate microwave emitter for each waveguide. The emitter can for example be a microwave generator or a part of a power divider. Providing a separate emitter for each waveguide is better able to ensure that the correct power and frequency is being applied. In some prior art arrangements, a single microwave emitter emits microwaves which are then passed through multiple waveguides in a serpentine path. However, this means that the load presented in each waveguide has an attenuation effect on each waveguide pass and the temperature profile is difficult to control. Such systems are generally used in drying applications where heating uniformity is either not an issue or the dry material is non-recepetive to microwave. As explained above, for heating formable products, it is important that a very uniform temperature profile is provided. Providing a separate emitter for each waveguide can enable precise tuning to be applied to each waveguide to maximise the efficiency of heating and the uniformity of the resulting temperature profile.

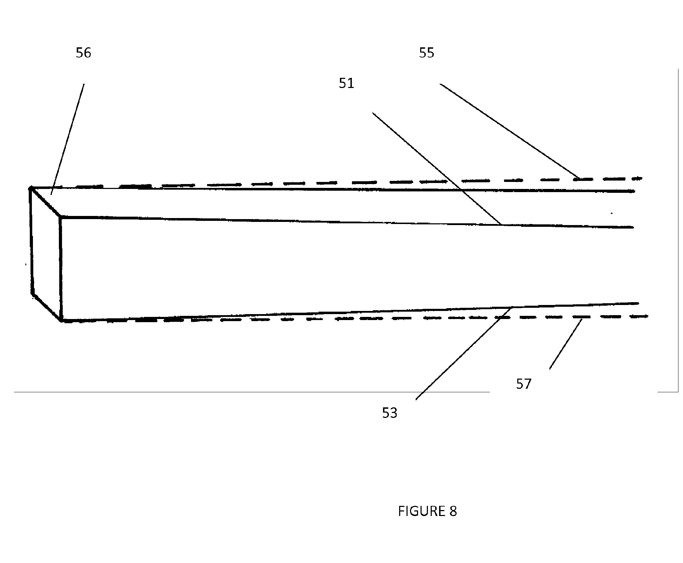

Although the embodiments disclosed above and shown in Figures 6 and 7 are described as being rectangular cuboids, it is preferred that the waveguides have top and bottom walls which taper along their lengths, that is converge in a direction towards the centre of the waveguide. An example is shown in Figure 8. The reason for this is that the overall field strength will decrease along the waveguide from the entry position 56 towards the reflection end 60, particularly when a substrate is located in the waveguide.

Having the top and bottom walls 51, 53 converge towards the central axis of the waveguide as shown in Figure 8 (the dotted lines 55, 57 representing a cuboidal form) concentrates the field strength and thus leads to a more even field strength across the heating zone of the waveguide.

Specifically, the resonant waveguides are preferably tapered in the width of their narrow faces so as to vary the cut-off wavelength, and therefore substantially to compensate for the naturally occurring attenuation of the coupling of the load to the microwave field.

A person skilled in the art will be able to determine a suitable taper or convergence from these teachings and common general knowledge.

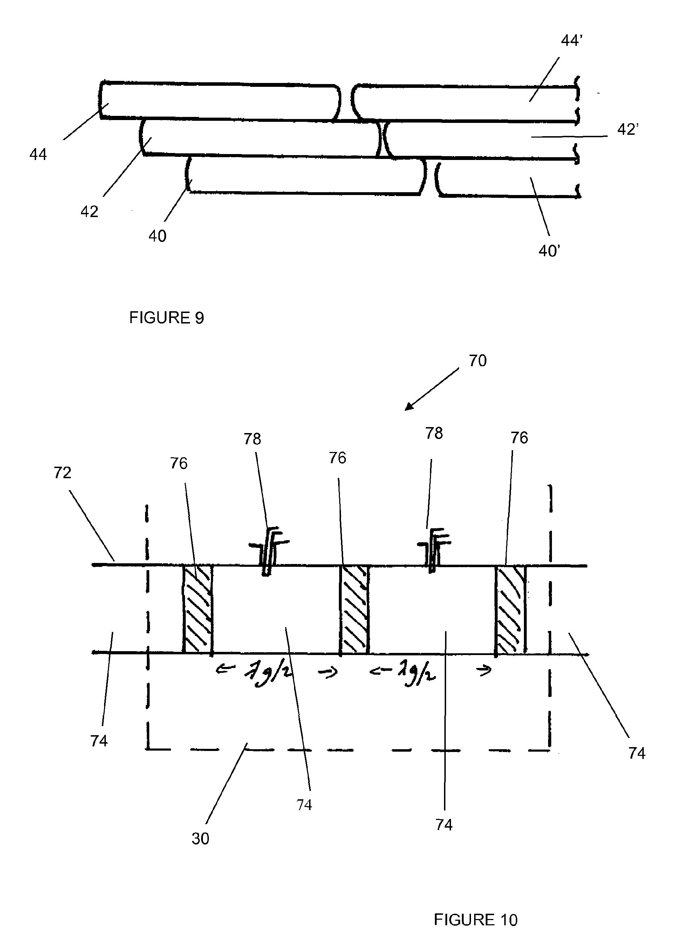

Figure 9 shows another embodiment, in which there is provided a plurality of sets of waveguides 40-44. In the embodiment shown there are two such sets, with the second set 40'-44' being positioned alongside the first set 40-44. This arrangement allows for the processing of two substrates 30, 30' in side-by-side fashion, such that they can then be coupled together for the formation of an article of substantial width. Any number of sets of waveguides could be arranged in this manner. Furthermore, it is envisaged that sets of waveguides could be disposed on top of one another, so as to produce a thicker heated substrate, in which two or more substrate sheets 30 are heated by their respective waveguide sets and then joined together in overlying manner.

Figure 10 shows yet another embodiment 70 for the heating of a substrate of substantial width. The structure 70 provides a common waveguide tube 72 which is segmented into a plurality of separate cavities providing separate waveguide stages 74 by means of separating walls 76. Each waveguide stage 74 has its own individual microwave feed 78, from a common or separate generator. The waveguide tube 72 is provided with a common slot spanning a width necessary for accommodating a substrate sheet 30 and in practice which spans a plurality of the waveguide stages 74.

This arrangement is for an extremely wide sheet. Figure 10 shows only one section of the setup; the full arrangement looks more like Figure 9 but with each row of adjacent waveguides 40 and 40', 42 and 42', 44 and 44' replaced with a common waveguide tube 72.

Due to the way the waveguide sections are butted together in Figure 10 it can be difficult to fit the microwave generators at the ends of the guide. The arrangement shown in Figure 10 efficiently enables more than two side-by-side sections of waveguide.

The adjacent waveguides can be separated by a wall thickness of approximately one quarter wavelength.

It is to be appreciated that the arrangement of Figures 5 and 6 represents the preferred embodiment and that this does not exclude other structures. For instance, as described above, it is not necessary to have the waveguides 40-44 arranged in the order shown in these Figures. This embodiment would work equally efficiently with the order of the waveguides 40-44 altered in any desired manner, since the substrate 30 would still be heated by three offset heating stages.

Similarly, it is not necessary to have three waveguides as a device could be formed by a different multiple of three waveguides, for instance six, nine or twelve. However, it has been found that three waveguides is the most efficient solution in terms of efficiency and uniformity.

It is envisaged that the assemblies taught herein could be supplemented with an additional heating stage, for instance to keep the substrate in its heated state pending thermoforming. For this purpose, there may be provided a plain heating tunnel at the exit from the waveguide assembly, preferably heated by hot air. Alternatively or additionally the heating tunnel could be heated by infrared heating or any other suitable heating system.

In the embodiments described above, the operational frequency may be 2450 ±50 MHz (Worldwide); 896 ± 10 MHz (United Kingdom); or 915 ± 13 MHz (USA, N and S America). In practice, the apparatus could be designed to operate at any of these frequencies, which are then selected on the basis of the location in which the apparatus is used. The operational frequency may be any frequency subject to radio frequency leakage limits being compatible with interference limits of other users, radar, telecommunications.

It will be apparent that in practice the apparatus will include a mechanism to feed the substrate 30 through the heating stages. One embodiment provides in the web of the substrate 30 slots in the selvage edges which engage with drive rollers of a drive mechanism of the apparatus, the rollers having pins which match the selvage and thereby to provide a means of positive mechanical drive.

Preferably, the resonant waveguides are manufactured by a milled-block technique.

The heating apparatus can provide for the uniform heating of a wide web of 'lossy' dielectric material. In general, the apparatus can be used for the heating of any thermo formable material and indeed for any material which needs to be heated for use, curing or a subsequent manufacturing stage. It could, for instance, be used for thermoplastics materials, heating webs, food products and so on.

In some practical embodiments it may be preferable to provide a single control providing an adjustable total power to the heating stages, in its simplest form providing a temperature regulation control dial. For this purpose, there may be provided a calibration setting device, conveniently a potentiometer, able to calibrate the different heating stages such that they can then be controlled by the single heating control.

All optional and preferred features and modifications of the described embodiments and dependent claims are usable in all aspects of the invention taught herein. Furthermore, the individual features of the dependent claims, as well as all optional and preferred features and modifications of the described embodiments are combinable and interchangeable with one another.

The disclosures in United Kingdom patent application number 1406657.5, from which this application claims priority, and in the abstract accompanying this application are incorporated herein by reference.

**Claims**

1. A method of heating a work piece by microwave radiation including providing n microwave heating stages in respective waveguides, which heating stages provide respective standing waves which are phase offset relative to one another by substantially $2\pi/n$ radians, and passing the work piece through the heating stages so as to cause the work piece to be heated by each of the n microwave stages; wherein n is a multiple of three.

2. A method according to claim 1, wherein the work piece is a formable material, preferably including thermoplastic material; and wherein the method optionally includes, subsequent to passing the work piece through the heating stages, thermoforming the work piece.

3. A method according to any of claims 1 to 2, wherein the heating stages are offset relative to one another by substantially $\lambda g/n$, wherein $\lambda g$ is the guide wavelength of the microwave radiation.

4. A method according to claim 3, wherein the heating stages are offset relative to one another by $\lambda g/n + x$, wherein for each heating stage, x is a tuning adjustment that allows balancing of the energy application across the work piece.

5. A method according to any preceding claim, including monitoring a power of reflected microwaves within each of the heating stages, and tuning the heating stages to minimise the overall power of reflected microwaves, preferably including adjusting x for each heating stage and/or varying the power provided to each heating stage.

6. A method according to any preceding claim, wherein the heating stages are arranged in series in the direction of motion of the work piece through the heating stages and/or microwave power is balanced between stages to produce a substantially uniform energy distribution.

7. Apparatus for heating a work piece by microwave radiation including at least one heating unit comprising n waveguides, each waveguide providing a microwave heating stage, the heating stages being susceptible to having standing waves produced therein which are phase offset relative to one another by substantially $2\pi/n$ radians so the waveguides can provide heating displaced in phase relative to one another; and a common heating path for a work piece to pass through the n waveguides, wherein the apparatus provides for the work piece to be heated by each of the n heating stages; wherein n is a multiple of three.

8. Apparatus according to claim 7, wherein the heating stages are offset relative to one another by substantially $\lambda g/n$, wherein $\lambda g$ is the guide wavelength of microwaves which a microwave emitter is configured to emit into each waveguide.

9.  Apparatus according to claim 7 or 8, wherein the heating stages are offset relative to one another by $\lambda g/n + x$, wherein for each heating stage, x is a tuning adjustment that allows balancing of the energy application across the work piece; wherein $\lambda g$ is the guide wavelength of microwaves which a microwave emitter is configured to emit into each of the waveguides; wherein the tuning mechanism is preferably configured for adjusting x for each heating stage; wherein the tuning mechanism preferably includes a movement mechanism for adjusting a relative offset of the waveguides.

10. Apparatus according to any one of claims 7 to 9, including a plurality of microwave emitters, each for a respective waveguide; wherein a control unit is optionally operable to vary the microwave power of each emitter to balance the power between the stages to produce a substantially uniform temperature distribution.

11. Apparatus according to claim 10, wherein:

    each emitter includes a microwave generator; or there is provided a common microwave generator and a passive divider coupled between the generator and the waveguides.

12. Apparatus according to any one of claims 7 to 11, wherein the n waveguides are similar rectangular waveguides having slots cut centrally along the centre-lines of broad faces thereof to allow passage of a work piece; and/or the waveguides are arranged in echelon formation at right angles to an axis of travel of the work piece.

13. Apparatus according to any one of claims 7 to 12, wherein:

    the waveguides are arranged so that E-field standing waves are positioned relatively at longitudinal positions 0 (datum), and $2\pi i/n$ electrical radians for i = 1 to (n-1); and/or
    the apparatus includes a drive mechanism to drive the work piece through the heating stages, wherein the drive mechanism is preferably operable to drive the work piece intermittently or continuously at a controlled velocity.

14. Apparatus according to any one of claims 7 to 13, wherein the waveguides are tapered in a direction along a width of broad faces thereof and/or adjacent waveguides are separated by a wall thickness of approximately one quarter wavelength.

15. Apparatus according to any one of claims 7 to 14, wherein there are provided a plurality of heating units; wherein the heating units are optionally arranged linearly with respect to one another in a direction of movement of a work piece through the apparatus; wherein the heating units are optionally arranged in parallel so as to heat simultaneously different work pieces or a wide work piece; wherein the parallel arranged heating units are optionally stacked on top of one another so as to process respective work pieces arranged in stacked relation.

FIGURE 1

VINPUT 22

Resultant 24

FIGURE 2

MICROWAVE FIELD INTENSITY

DISTANCE ALONG WAVEGUIDE

FIGURE 3

30    32    34    32    34    32    34

10

FIGURE 4

44

48

46

42

40

50

FIGURE 5

FIGURE 6

FIGURE 7

FIGURE 8

44'

42'

44

42

40

40'

FIGURE 9

70

78   78   76

72   76   76

74

$\leftarrow \lambda g/2 \rightarrow$   $\leftarrow \lambda g/2 \rightarrow$

74

74

74

30

74

FIGURE 10

Europäisches
Patentamt

European
Patent Office

Office européen
des brevets

## EUROPEAN SEARCH REPORT

Application Number

EP 15 27 5121

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/134155 A1 (YOSHIKADO SHINZO [JP] ET AL) 30 May 2013 (2013-05-30)<br>* paragraph [0003] *<br>* paragraph [0020] - paragraph [0040] *<br>* paragraph [0082] - paragraph [0118] *<br>* figures 1-6c *<br>----- | 1-15 | INV.<br>B29B13/02<br>B29B13/08<br>B29C51/42<br>H05B6/78<br><br>ADD.<br>B29C35/08 |
| A | GB 668 835 A (BRITISH THOMSON HOUSTON CO LTD) 26 March 1952 (1952-03-26)<br>* page 1, line 9 - line 40 *<br>* page 1, line 84 - page 2, line 5 *<br>* page 2, line 25 - page 3, line 49 *<br>* figures 1-4 *<br>----- | 1-15 | |

TECHNICAL FIELDS
SEARCHED      (IPC)

B29B
B29C
H05B
F26B

The present search report has been drawn up for all claims

| Place of search | Date of completion of the search | Examiner |
|---|---|---|
| The Hague | 17 August 2015 | Fageot, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 27 5121

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2015

| Patent document cited in search report | | Publication date | Patent family member(s) | Publication date |
|---|---|---|---|---|
| US 2013134155 | A1 | 30-05-2013 | CN 103135420 A | 05-06-2013 |
| | | | DE 102012023103 A1 | 29-05-2013 |
| | | | JP 5536743 B2 | 02-07-2014 |
| | | | JP 2013114835 A | 10-06-2013 |
| | | | US 2013134155 A1 | 30-05-2013 |
| GB 668835 | A | 26-03-1952 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2042703 A
- GB 650337 A
- EP 0667732 A1
- FR 2683420
- US 20020088799 A1
- EP 0089288 A1
- JP 2006134621 B
- US 1406657 A